(19) Europäisches Patentamt / European Patent Office / Office européen des brevets

(11) **EP 2 711 471 B1**

(12) **EUROPEAN PATENT SPECIFICATION**

(45) Date of publication and mention
of the grant of the patent:
**04.09.2019   Bulletin 2019/36**

(21) Application number: **12784997.4**

(22) Date of filing: **14.05.2012**

(51) Int Cl.:
*E02F 9/26* *(2006.01)*          *E02F 9/24* *(2006.01)*
*H04Q 9/00* *(2006.01)*          *G05B 23/02* *(2006.01)*
*G07C 5/08* *(2006.01)*

(86) International application number:
**PCT/JP2012/062288**

(87) International publication number:
**WO 2012/157603 (22.11.2012 Gazette 2012/47)**

(54) **SHOVEL, MONITORING DEVICE THEREFOR, AND SHOVEL OUTPUT DEVICE**

SCHAUFEL, ÜBERWACHUNGSVORRICHTUNG DAFÜR UND
SCHAUFELAUSGABEVORRICHTUNG

PELLE, DISPOSITIF DE SURVEILLANCE ASSOCIÉ, ET DISPOSITIF DE SORTIE DE PELLE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:  **16.05.2011   JP 2011109437**

(43) Date of publication of application:
**26.03.2014   Bulletin 2014/13**

(60) Divisional application:
**19188023.6**

(73) Proprietor: **Sumitomo Heavy Industries, Ltd.
Tokyo 141-6025 (JP)**

(72) Inventor: **TSUKANE, Kaoru
Yokosuka-shi, Kanagawa 237-8555 (JP)**

(74) Representative: **Carstens, Dirk Wilhelm
Wagner & Geyer Partnerschaft mbB
Patent- und Rechtsanwälte
Gewürzmühlstraße 5
80538 München (DE)**

(56) References cited:
**WO-A1-2009/020229      WO-A1-2011/092830
WO-A2-2004/038643      JP-A- 7 119 183
JP-A- 2001 133 295      JP-A- 2002 332 664
JP-A- 2011 070 397**

**Description**

Technical Field

The present invention relates to a shovel capable of determining an operational abnormality, a monitoring device of the shovel, and an output device mounted on a shovel capable of determining an operational abnormality.

Background Art

A failure determination method for construction equipment, based on a detection value detected by a sensor mounted on the construction equipment, has been known (see JP 2002-332664 A) . Failure information is sent to a center, and therefore a failure diagnosis procedure is extracted in the center, based on the sensor detecting an abnormal value. An operator of the construction equipment conducts a failure diagnosis in accordance with the failure diagnosis procedure.

JP 2011-070397 A discloses a machine failure monitor which includes: a basic information creation part which creates basic information including priority defined according to the type of failure when a failure determination part determines occurrence of failure; a snapshot data storage part storing the snapshot data on the failure in association with the basic information; and a storage control part which, when a snapshot data storage part has no free capacity and a new failure occurs and if there is snapshot data with a lower priority than the priority of the new failure in the past snapshot data stored in the snapshot data storage part, stores the snapshot data on the new failure in association with the basic information in place of the past snapshot data with the lower priority, in the snapshot data storage part.

Summary of Invention

Problems to be Solved by Invention

In some cases, it is difficult to specify the cause of failure only by performing a diagnosis based on the detection value of the sensor and following the failure diagnosis procedure even when the failure diagnosis procedure is provided. Particularly, an attachment, such as a boom, and a cabin are mounted on a revolving superstructure of a shovel. Thus, motion not only in a front-rear direction but also in a right-left direction is carried out in the shovel. Since a working range of the shovel is extensive as described above, a situation in which the shovel encounters failure is likely to occur. An object of the invention is to provide a shovel which enables an operator to easily specify the cause of failure by making the operator confirm the circumstances at the time of failure and a monitoring device of the shovel.

Means of Solving Problems

According to an aspect of the invention, there is provided a shovel as set forth in claim 1.
According to another aspect of the invention, there is provided a method of monitoring a shovel, as set forth in claim 11.
Preferred embodiments of the present invention may be gathered from the dependent claims.

Advantageous Effects of Invention

It is possible to investigate the cause of abnormality using image data at the time where an operation state is determined to be abnormal.

Brief Description of Drawings

FIG. 1A and FIG. 1B are a side view and a plan view, respectively, of a shovel according to an embodiment 1.
FIG. 2 is a block diagram of the shovel according to the embodiment 1.
FIG. 3 is a flowchart showing a process of an image capture control device of the shovel according to the embodiment 1.
FIG. 4 is a flowchart showing a process of a control device of the shovel according to the embodiment 1.
FIG. 5 is a view showing an example of an image displayed on an output device of the shovel according to the embodiment 1.
FIG. 6 is a flowchart showing a process of a control device of a shovel according to an embodiment 2.

FIG. 7 is a chart showing an example of a detection value detected by a sensor.
FIG. 8 is a view showing an example of an image displayed on an output device of the shovel according to the embodiment 2.
FIG. 9 is a block diagram of a shovel and a monitoring device according to an embodiment 3.
FIG. 10 is a flowchart showing a process of a control device of the shovel according to the embodiment 3.
FIG. 11 is a block diagram of a shovel and a monitoring device according to an embodiment 4.
FIG. 12 is a flowchart showing a process of a control device of the monitoring device according to the embodiment 4.

Description of Embodiments

[Embodiment 1]

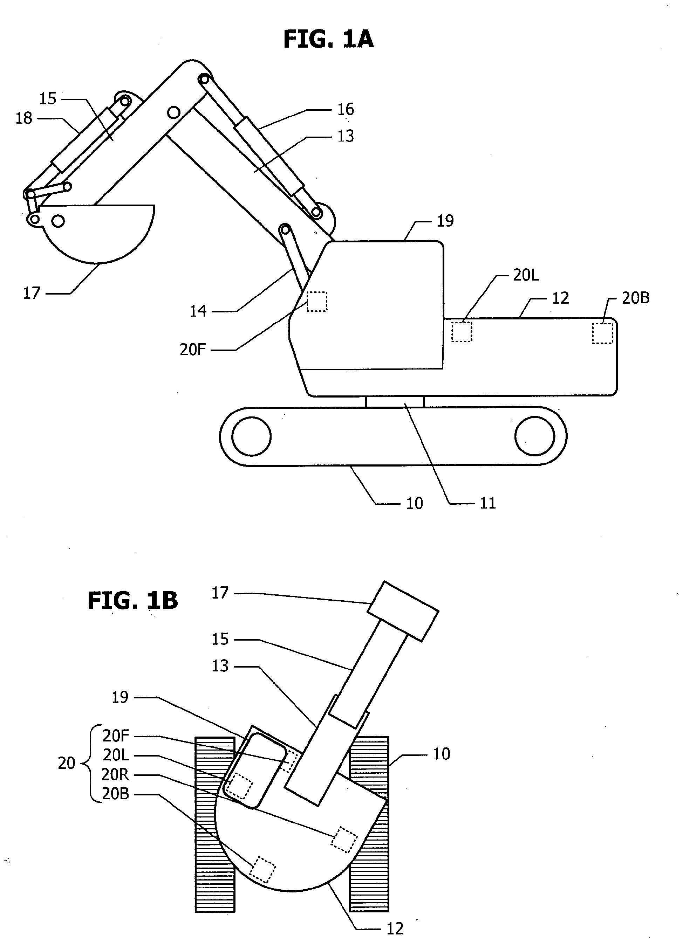

FIG. 1A and FIG. 1B are a side view and a plan view, respectively, of a shovel according to an embodiment 1. A hydraulic shovel exemplifies a shovel, in the embodiment 1. However, the embodiment 1 can be adopted to other shovels, such as a hybrid shovel or an electric shovel.

An upper revolving superstructure 12 is mounted to an undercarriage 10 via a revolving bearing 11. The upper revolving superstructure 12 revolves clockwise or counter-clockwise with respect to the undercarriage 10. A boom 13 is installed on the upper revolving superstructure 12. An arm 15 is connected to a tip of the boom 13. A bucket 17 is connected to a tip of the arm 15. The boom 13 is driven by a hydraulic cylinder 14. The arm is driven by a hydraulic cylinder 16. The bucket 17 is driven by a hydraulic cylinder 18. Furthermore, a cabin 19 is mounted to the upper revolving superstructure 12, and a driver gets into the cabin 19 and operates a hydraulic shovel.

An imaging device 20 is mounted to the upper revolving superstructure 12. A frontward imaging device 20F, a right imaging device 20R, a left imaging device 20L and a backward imaging device 20B constitute the imaging device 20. The frontward imaging device 20F, the right imaging device 20R, the left imaging device 20L and the backward imaging device 20B respectively image front, right, left and back sides of the upper revolving superstructure 12. The frontward imaging device 20F is mounted between the cabin 19 and the boom 13, for example. An omnidirectional image can be obtained by combining images obtained by these imaging devices.

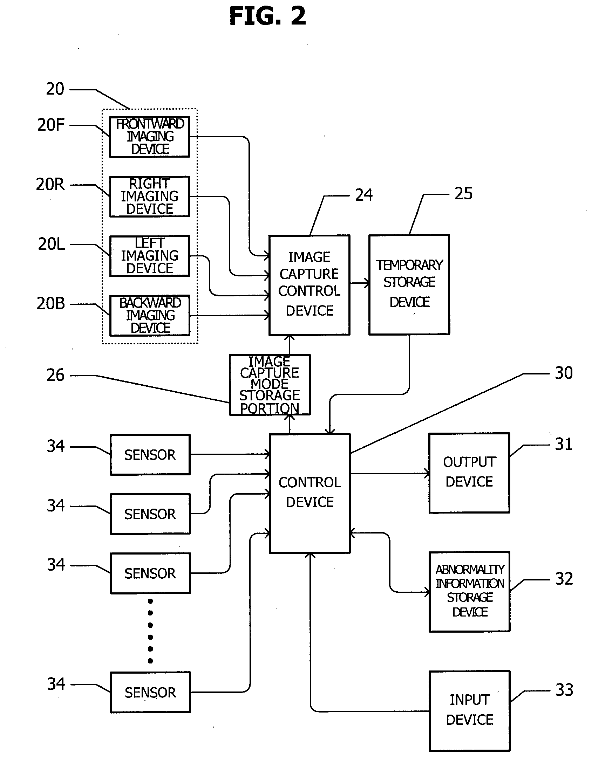

FIG. 2 shows a block diagram of an abnormality determination function of the shovel. An image capture control device 24 stores image data acquired by the imaging device 20 in a temporary storage device 25 at a predetermined cycle. The temporary storage device 25 has a ring buffer structure, for example. In other words, the oldest image data are overwritten (replaced) with new image data when no free storage area remains.

Information that specifies a capturing method of the image data, such as resolution and a capturing cycle, is stored in an image capture mode storage portion 26. A parameter for specifying the resolution is set to any one of a "high resolution", a "normal resolution" and a "low resolution", for example. A parameter for specifying the capturing cycle is set to any one of a "long cycle", a "normal cycle" and a "short cycle". An image capture mode is determined by the resolution and the capturing cycle. An operator operates an input device 33 to input the image capture mode to a control device 30. Then, the image capture mode is set to the image capture mode storage portion 26. An image capture cycle is about several hundred ms to 1 sec, for example.

The image capture control device 24 stores image data acquired by the imaging device 20, based on the image capture mode set to the image capture mode storage portion 26, in the temporary storage device 25. By decreasing image resolution or lengthening the capturing cycle, it is possible to store a long term image data in the temporary storage device 25. On the contrary, by increasing the image resolution and shortening the capturing cycle, it is possible to increase an information amount of image data in a predetermined time.

A plurality of sensors 34 are installed on the shovel. The sensors 34 detect physical quantities relating to an operation state of the shovel. An engine speed, a radiator coolant temperature, a fuel temperature, an atmospheric pressure, an engine oil pressure, a boost temperature, an intake temperature, a hydraulic operating fluid temperature, a boost pressure, a battery voltage, a hydraulic pressure of each part, a machine operation time, a traveling operation time, a revolving operation time, an idle time and the like are exemplified as the physical quantities relating to the operation state.

The control device 30 controls the temporary storage device 25, the image capture mode storage portion 26, an output device 31, and an abnormality information storage device 32. Instructions of an operator are input to the control device 30 via the input device 33. The detection values detected by the sensors 34 are input to the control device 30. A liquid crystal display device is adopted as the output device 31, for example. A touch-panel type liquid crystal display device may be adopted as a device functioning as the output device 31 and the input device 33.

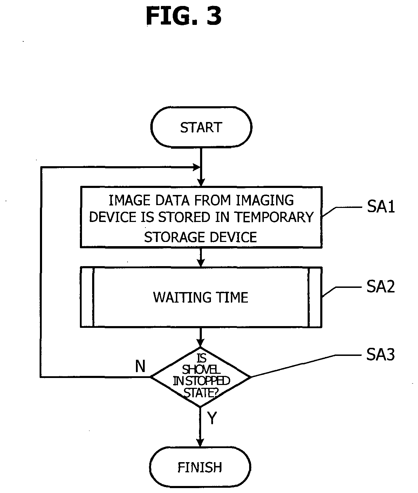

FIG. 3 shows a flowchart of an operation of the image capture control device 24. When an engine start key of the shovel is turned on, the image data is acquired from the imaging device 20 in step SA1. The resolution of the image data is converted so as to be the resolution specified in the image capture mode, and then the converted image data is stored in the temporary storage device 25. When a free area for storing the image data does not remain, the oldest image data are overwritten with new image data.

In step SA2, a period of a capturing cycle specified in the image capture mode elapses. Then, whether or not the start key of the shovel is in a stopped state is determined in step SA3. When the start key of the shovel is in a stopped state, the process is finished. When the start key of the shovel is not in a stopped state, the process returns to step SA1.

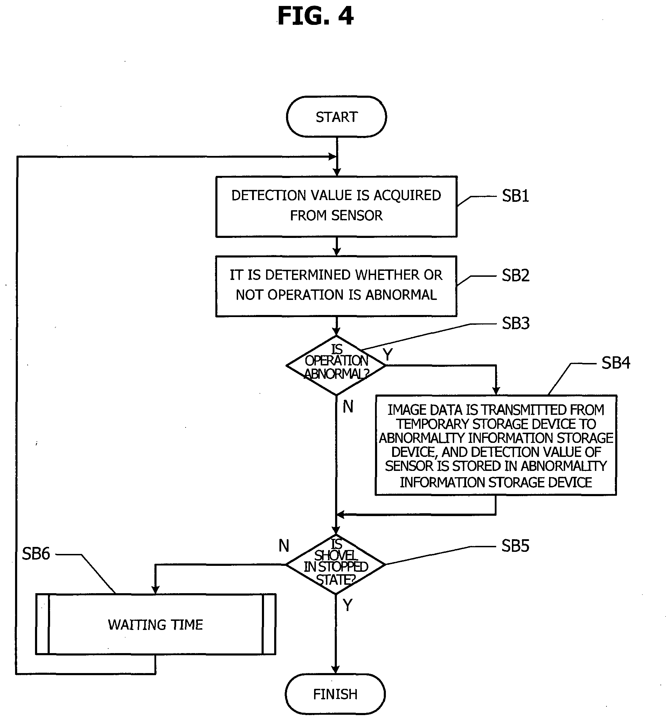

FIG. 4 shows a flowchart of an operation of the control device 30. When the engine start key of the shovel is turned on, the detection values detected by the sensors 34 are acquired in step SB1. Whether or not the acquired detection values are within an allowable range is determined in step SB2. The allowable range is preset for each physical quantity relating to the operation state.

Whether or not the operation state is abnormal is determined in step SB3. When at least one of the detection values is out of the allowable range, the operation state of the shovel is determined to be abnormal. When all the detection values are within the allowable range, the operation state is determined to be normal. When the operation state is determined to be normal, whether or not the shovel is in a stopped state is determined in step SB5. When the operation state is determined to be abnormal, step SB4 is executed. Then, whether or not the shovel is in a stopped state is determined in step SB5.

Hereinafter, a process of step SB4 will be described. Among the image data stored in the temporary storage device 25, the image data which corresponds to a period from a first time prior to a time at which the operation is determined to be abnormal to the present is read out and stored in the abnormality information storage device 32. Furthermore, the detection value of each sensor 34 at the time when the operation is determined to be abnormal is stored in the abnormality information storage device 32. The stored image data and the detection value of the sensor 34 are associated with each other. The image data and the detection value of the sensor 34 may be associated with each other, based on indices given thereto, for example. In addition, the image data and the detection value of the sensor 34 may be associated with each other, based on the time at which the data is acquired.

Furthermore, in addition to the image data corresponding to a period prior to the time at which the operation is determined to be abnormal, image data corresponding to a period after that time may be stored in the abnormality information storage device 32. At a second time following the time at which the operation is determined to be abnormal, the image data corresponding to a period from the first time to the second time may be transmitted from the temporary storage device 25 to the abnormality information storage device 32 after waiting for the image data transmission until the second time, for example. A period from the first time to the time at which the operation is determined to be abnormal is set to about 30 sec to 5 min, and a period from the time at which the operation is determined to be abnormal to the second time is set to about 10 sec to 1 min.

Furthermore, an alarm may be raised from the output device 31 to inform an operator that the operation state is abnormal.

When, in step SB5, it is determined that the shovel is in a stopped state, the process is finished. When it is determined that the shovel is not in a stopped state, the process returns to step SB1 after a predetermined time elapses in step SB6. The waiting time of step SB6 is set to several hundred ms to 1 sec, for example.

In the embodiment 1, the image data corresponding to a period before the time at which the operation is determined to be abnormal or a period before and after the time is stored in the abnormality information storage device 32. The image data is useful in specifying the cause of abnormality. When any abnormality occurs in the shovel, it is possible for a maintenance person to search for the cause of the abnormality by operating the input device 33 (see FIG. 2).

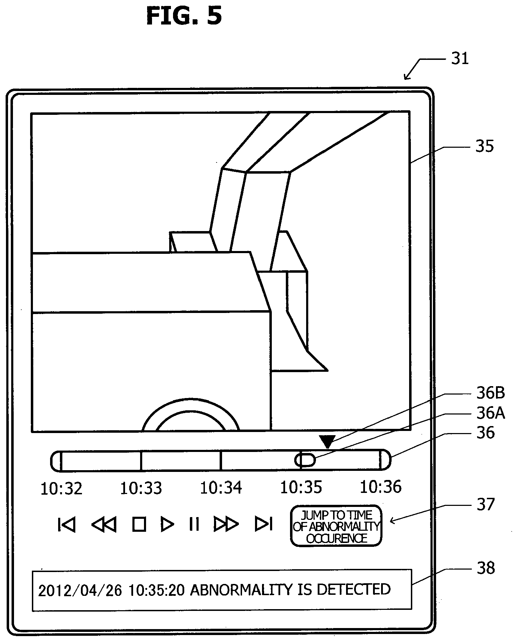

FIG. 5 is a view showing an example of an image displayed on the output device 31 at the time of searching for the cause of abnormality. An image display window 35, a progress status bar 36, operating icons 37 and a character information display window 38 are shown in a display screen. A display screen when it is determined that an abnormality has occurred at the time of 10:35:20 on April 26, 2012 is exemplarily shown in FIG. 5.

The progress status bar 36 shows a period from a data collection start time of the image data stored in the abnormality information storage device 32 (see FIG. 2) to a finish time. When a slider 36A displayed in the progress status bar 36 is slid, an image at the time corresponding to the position of the slider 36A is displayed on the image display window 35. A mark 36B for indicating abnormality occurrence time is displayed on the progress status bar 36 at the position corresponding to a time of abnormality occurrence. The progress status bar 36 and the slider 36A function as a time indicator by which the time of the image to be displayed on the image display window 35 is indicated. The length of the progress status bar 36 corresponds to a time range within which the time can be specified by the slider 36A. A numeric input window used for inputting a time as a numeric value may be displayed as a time indicator, instead of the slider 36A.

. A playback, a frame-by-frame playback, a pause or the like of moving image can be carried out by operating the operating icon 37. In addition, the operating icon 37 includes an instruction button used for jumping to the time of abnormality occurrence. When the instruction button is operated, the image at the time when the operation is determined to be abnormal in step SB2 shown in FIG. 4 is displayed on the image display window 35. It is possible to quickly display the image at the time immediately before the time of abnormality occurrence, by providing the instruction button used for jumping to the time of abnormality occurrence.

FIG. 5 shows an example of an image at the time when the hydraulic abnormality is detected. It is possible to know that a truck intrudes between the upper revolving superstructure 12 and the bucket 17 (see FIGs. 1A and 1B), from the image shown in FIG. 5. Here, the following estimation can be carried out. The truck is in contact with hydraulic piping, and thus the hydraulic piping is broken. Therefore, a hydraulic abnormality is detected. In this way, it is possible to specify the cause of the abnormality by inspecting the image data corresponding to a period before and after the time at which the abnormality occurs.

[Embodiment 2]

A functional block diagram of a shovel according to an embodiment 2 is the same as the functional block diagram of the shovel according to the embodiment 1 shown in FIG. 2.

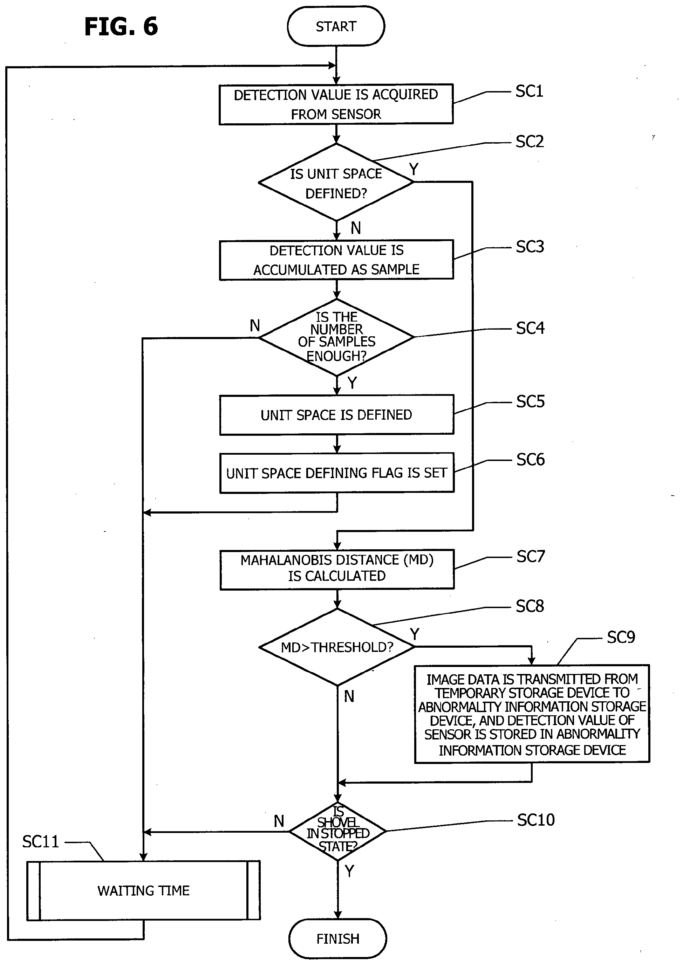

FIG. 6 is a flowchart showing an operation of the control device 30 (see FIG. 2) of the shovel according to the embodiment 2. The control device 30 of the shovel according to the embodiment 2 includes a unit space defining flag and an area for storing the inverse matrix of a correlation matrix.

The detection value is acquired from the sensor 34 (see FIG. 2), in step SC1. Whether or not the unit space is defined is determined in step SC2. Specifically, it is determined whether the unit space defining flag is set to "defined" or "undefined", in step SC2. The unit space is used as a reference for determination when the abnormality determination using Mahalanobis-Taguchi method is carried out in the following step. When the unit space is undefined, the detection value of the sensor 34 is accumulated as a sample, in step SC3. Whether or not the number of accumulated samples is enough is determined in step SC4. When the number of samples is enough, the unit space is defined in step SC5. Specifically, the correlation matrix of physical quantities of samples which constitute the unit space and the inverse matrix of the correlation matrix are calculated.

Hereinafter, a method of defining the unit space will be described.

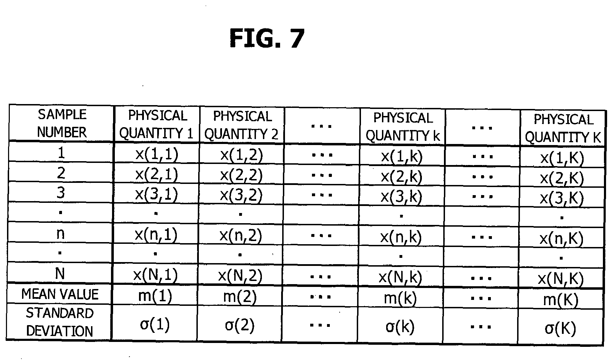

FIG. 7 shows an example of the detection values detected by the sensor 34. The number of physical quantities of a detection target is represented by K, and the number of accumulated samples is represented by N. The detection values of N samples constitute the unit space. In a sample to which the sample number n is assigned, the detection value of a physical quantity k is indicated as x(n,k). The mean value and the standard deviation are calculated with respect to the detection values of each physical quantity. The mean value and the standard deviation of the physical quantity k are indicated as m(k) and $\sigma$(k), respectively.

The detection values of each sample are standardized, whereby standardized detection values are calculated. The standardized detection value X(n,k) of the detection value x(n,k) of the physical quantity k in the sample to which the sample number n is assigned is shown as the following Equation.

[Equation 1]

$$X(n,k) = \frac{x(n,k) - m(k)}{\sigma(k)}$$

Correlation coefficients between the physical quantities are calculated based on the standardized detection values X (n, k) . A correlation coefficient r(i,j) of a physical quantity i and a physical quantity j is calculated by the following Equation.

[Equation 2]

$$r(i,j) = \frac{1}{N}\sum_{l=1}^{N} X(l,i)X(l,j)$$

A correlation matrix R of the physical quantities 1 to K is shown as the following Equation.

[Equation 3]

$$R = \begin{pmatrix} 1 & r(1,2) & \cdots & r(1,K) \\ r(2,1) & 1 & \cdots & r(2,K) \\ \vdots & \vdots & \ddots & \vdots \\ r(K,1) & r(K,2) & \cdots & r(K,K) \end{pmatrix}$$

An inverse matrix A of the correlation matrix R is calculated. The inverse matrix A is stored in the control device 30 so as to be available in the following step.

In step SC6, the unit space defining flag is set to "defined". In the case where the number of samples is determined to be not enough in step SC4, or after the unit space defining flag is set to "defined" in step SC6, the process waits for a predetermined time in step SC11. The waiting time is set to about several hundred ms to 1 sec, for example. After waiting for the predetermined time, the process returns to step SC1.

Furthermore, the unit space defining flag can be reset by the operation of an operator. In other words, it is possible to set the unit space defining flag to "undefined".

When, in step SC2, the unit space is determined to be defined, a Mahalanobis distance (MD) of the detection values (verification data) detected by each sensor 34 is calculated in step SC7. Hereinafter, a calculation method of the Mahalanobis distance will be described.

The value of a physical quantity k, out of K detection values (verification data) detected by the sensors 34, is indicated as y(k). The detection value y(k) is standardized, whereby a standardized detection value Y(k) is calculated. The standardized detection value Y(k) can be calculated by the following Equation.

[Equation 4]

$$Y(k) = \frac{y(k) - m(k)}{\sigma(k)}$$

The square ($D^2$) of the Mahalanobis distance of the verification data can be calculated by the following Equation using the inverse matrix A of the correlation matrix R.

[Equation 5]

$$D^2 = \frac{1}{K} \begin{pmatrix} Y(1) & Y(2) & \cdots & Y(K) \end{pmatrix} A \begin{pmatrix} Y(1) \\ Y(2) \\ \vdots \\ Y(K) \end{pmatrix}$$

When the Mahalanobis distance MD (or the square $D^2$ of the Mahalanobis distance) is calculated, the Mahalanobis distance MD and a threshold are compared in step SC8. The threshold is set in advance. The threshold is set to 2, for example. When the threshold is compared to the square $D^2$ itself of the Mahalanobis distance defined in Equation described above, the threshold is set to $2^2=4$. When the Mahalanobis distance MD is greater than the threshold, the process of step SC9 is to start. The process of step SC9 is the same as the process of step SB4 (see FIG. 4) in the embodiment 1.

When the process of step SC9 is finished or when the Mahalanobis distance MD is determined, in step SC8, to be equal to or less than the threshold, whether or not the shovel is in the stopped state is determined in step SC10. When the shovel is in the stopped state, the process is finished. When the shovel is not in the stopped state, the process waits for a predetermined time in step SC11. Then, the process returns to step SC1.

In the embodiment 2, the Mahalanobis-Taguchi method is adopted as a method of determining whether or not an operation state is abnormal. Thus, it is unnecessary to set the allowable range to each detection value of the sensors 34.

In the embodiment 1 described above, the allowable range of the detection value is set based on cases where the abnormality occurred in the past or the like, for example. Thus, there is a possibility that a new abnormality which has not occurred in the past may not be detected in some cases. However, by adopting the Mahalanobis-Taguchi method, it is unnecessary to set the allowable range of the detection value based on cases in the past. Therefore, it is possible to detect a new abnormality which has not occurred in the past.

Furthermore, deviation amounts of the plurality of detection values with respect to allowed values are integrated into the Mahalanobis distance (MD) in the embodiment 2, and thus it is possible to easily determine whether or not the operation is abnormal.

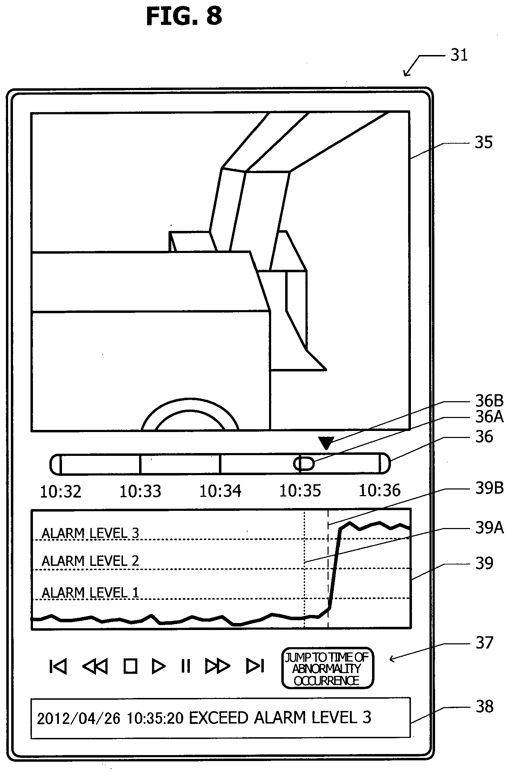

FIG. 8 shows an example of an image displayed on the output device 31 (see FIG. 2) when the cause of abnormality is searched for in the shovel according to the embodiment 2. Hereinafter, differences between the embodiment 2 and the embodiment 1 shown in FIG. 5 will be described. Besides the image display window 35, the progress status bar 36, the operating icon 37 and the character information display window 38, a window 39 for displaying an alarm level variation is shown in the embodiment 2. A variation graph of alarm levels with the elapsed time corresponding to a time range specified by the slider 36A is displayed in the window 39 for displaying the alarm level variation. A display image time line 39A is displayed in the window 39 for displaying alarm level variation at a position corresponding to the time (the time corresponding to the displayed image) specified by the slider 36A. Furthermore, an abnormality occurrence time line 39B is displayed in the window 39 for displaying the alarm level variation at a position corresponding to the mark 36B for indicating abnormality occurrence time. The alarm level shows the level of possibility that an abnormality is occurring in the shovel. The Mahalanobis distance calculated in step SC7 (see FIG. 6) is adopted as the alarm level. It is conceived that any cause of abnormality is generated immediately before the alarm level is increased rapidly.

[Embodiment 3]

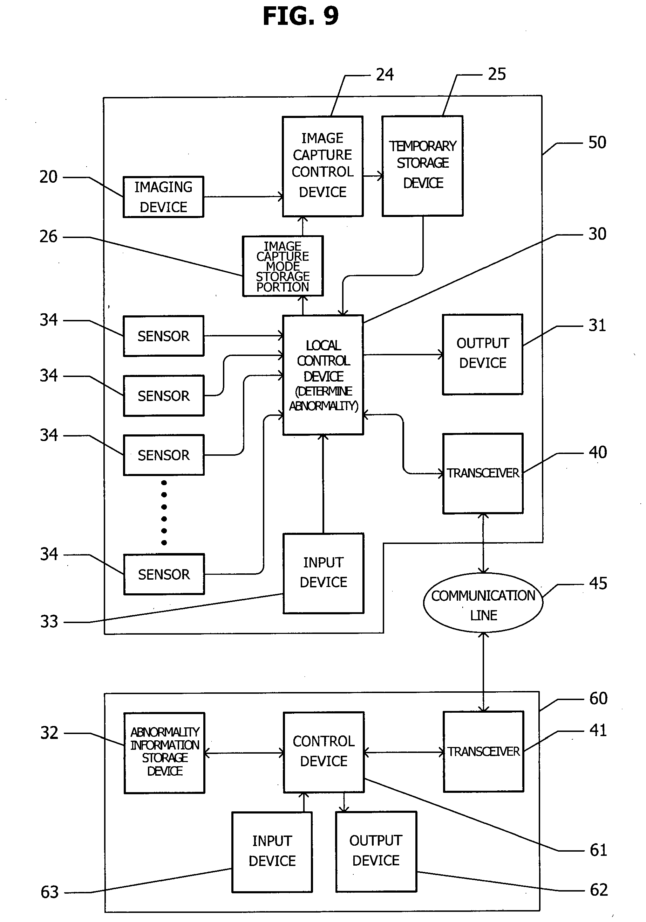

FIG. 9 shows a functional block diagram of a shovel and a monitoring device according to an embodiment 3. Hereinafter, a description focuses on differences between the shovel of the embodiment 3 and the shovel of the embodiment 1. A description of the same configuration will not be repeated.

In the embodiment 1, an abnormality determination process and the accumulation process of data when the abnormality occurs are completed only in the shovel. In the embodiment 2, the abnormality determination process is carried out by the local control device 30 mounted on a shovel 50. The image data and the like when the operation is determined to be abnormal are accumulated in a monitoring device 60. A transceiver 40 which transmits various data, such as image data, to the monitoring device 60 via a communication line 45 is mounted on the shovel 50.

A transceiver 41, a control device 61, an output device 62, an input device 63 and the abnormality information storage device 32 are provided in the monitoring device 60. The transceiver 41 receives data sent from the shovel 50 via the communication line 45. The control device 61 controls the output device 62, the input device 63 and the abnormality information storage device 32.

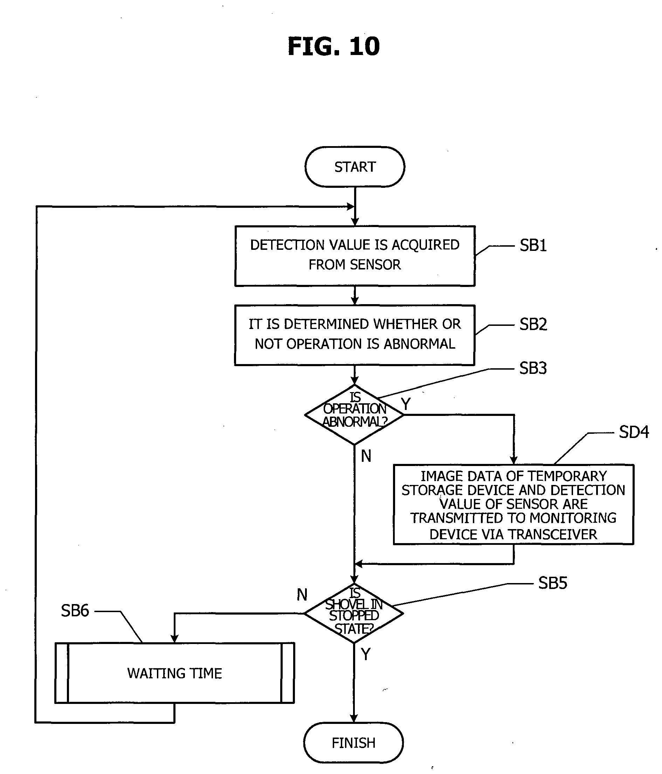

FIG. 10 shows a flowchart of a process performed by the local control device 30 mounted on the shovel 50. Steps SB1, SB2, SB3, SB5, and SB6 are, respectively, the same as steps SB1, SB2, SB3, SB5, and SB6 of the embodiment 1 shown in FIG. 4. The process of step SD4 is executed instead of step SB4 in the embodiment 1. Hereinafter, step SD4 will be described.

When the operation state is determined, in step SB3, to be abnormal, the local control device 30 waits until the second time following the determination time such that image data is accumulated in the temporary storage device 25. The image data corresponding to a period from the first time prior to a time at which the operation is determined to be abnormal to the second time, out of the image data stored in the temporary storage device 25, and the detection values of the sensors 34 when the operation is determined to be abnormal are transmitted from the transceiver 40 to the monitoring device 60. Instead, the image data corresponding to a period from the first time prior to the time at which the operation is determined to be abnormal to the time at which the operation is determined to be abnormal, out of the image data stored in the temporary storage device 25, may be transmitted. Furthermore, an alarm is raised from the output device 31, whereby the abnormality is notified to an operator.

Subsequently, a process of the control device 61 of the monitoring device 60 will be described. When the image data corresponding to a period before and after the time at which the operation state is determined to be abnormal and the detection values of the sensors are received from the shovel 50, the control device 61 stores the received image data in the abnormality information storage device 32. At the same time, an alarm is raised from the output device 62.

When an observer of the monitoring device 60 commands a data display via the input device 63, the control device 61 outputs the detection values of the sensor and the image data, which are accumulated in the abnormality information storage device 32, to the output device 62. The image data corresponding to a period before and after the time at which the operation is determined to be abnormal becomes useful information when an observer specifies the cause of abnormality. The image displayed on the output device 62 is the same as the image output on the output device 31 according to the embodiment 1 shown in FIG. 5 or the image output on the output device 31 according to the embodiment 2 shown in FIG. 8.

[Embodiment 4]

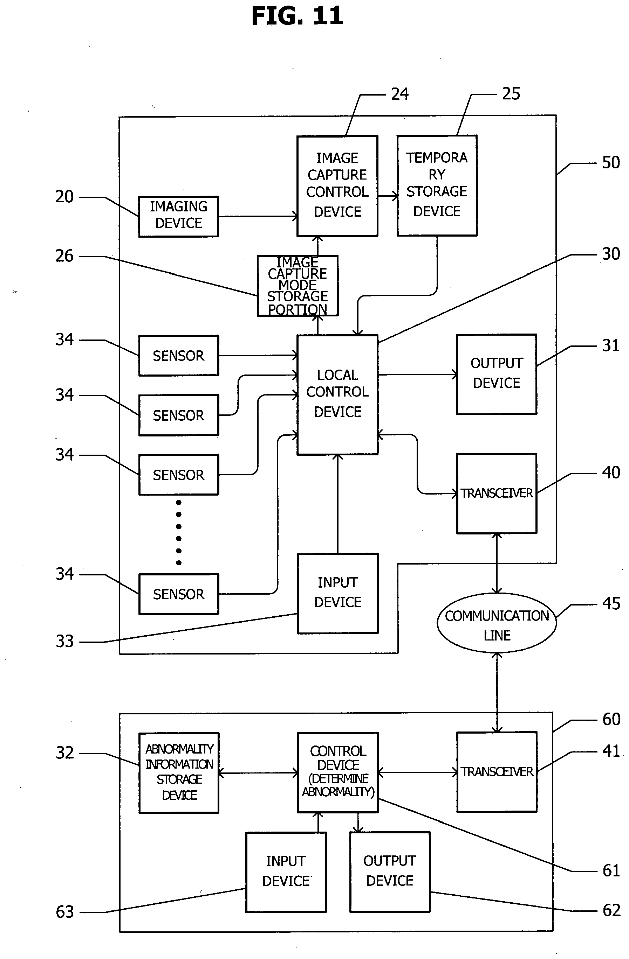

FIG. 11 is a functional block diagram of a shovel and a monitoring device according to an embodiment 4. Hereinafter, a description focuses on differences of the shovel and the monitoring device between the embodiment 4 and the embodiment 3. A description of the same configuration will not be repeated.

The local control device 30 mounted on the shovel 50 carries out the abnormality determination process in the embodiment 3. However, the control device 61 mounted on the monitoring device 60 carries out the abnormality determination process in the embodiment 4. The shovel 50 transmits an abnormality determination request as well as the detection values of the sensor 34 to the monitoring device 60 at predetermined cycles.

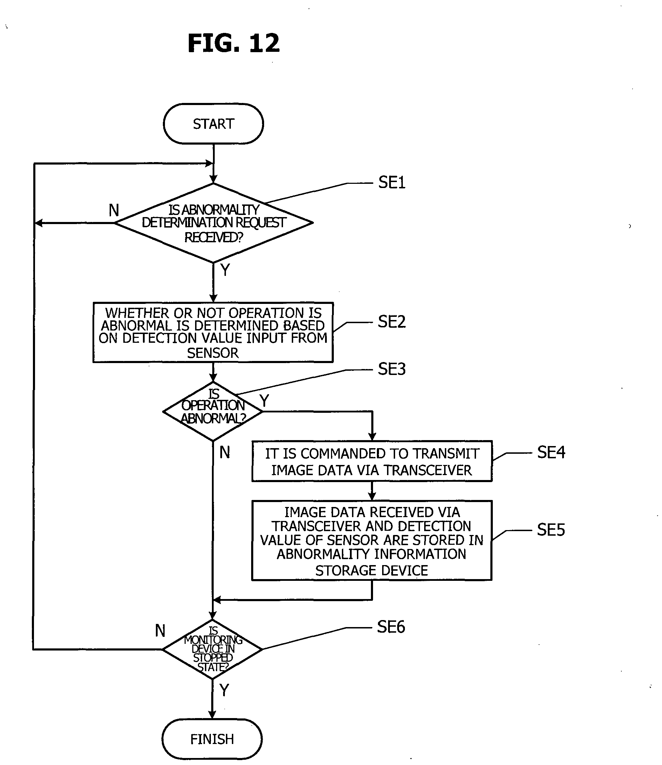

FIG. 12 shows a flowchart of a process performed by the control device 61 of the monitoring device 60. Whether or not the abnormality determination request is received from the shovel 50 is determined in step SE1. When the abnormality determination request is not received, step SE1 is repeated until the abnormality determination request is received.

When the abnormality determination request is received, the abnormality determination is performed in step SE2, based on the detection value of the sensor which is received from the shovel 50. The abnormality determination process is the same as the abnormality determination process of steps SB2 and SB3 (see FIG. 4) according to the embodiment 1 or steps SC7 and SC8 (see FIG. 6) according to the embodiment 2.

When the operation state is determined to be abnormal in step SE3, it is commanded, in step SE4, that shovel 50 transmits the image data. This command includes a start time (the first time) and a finish time (the second time) of the image data to be transmitted. When receiving the transmission command of the image data, the shovel 50 transmits the image data corresponding to a period from the first time to the second time, out of the image data accumulated in the temporary storage device 25, to the monitoring device 60 as a response to the command. In addition, it is preferable to perform a data compression of the image data before transmission.

In step SE5, the image data received from the shovel 50 and the detection values of the sensor at the time when the operation is determined to be abnormal are stored in the abnormality information storage device 32 in a state of being associated with each other. When a process of step SE5 is finished, whether or not the operation of the monitoring device 60 is in a stopped state is determined in step SE6. Whether or not the operation of the monitoring device 60 is in a stopped state is determined in step SE6, even when the operation is determined, in step SE3, not to be abnormal.

When the monitoring device 60 is determined, in step SE6, not to be in a stopped state, the process returns to step SE1. When the monitoring device 60 is determined to be in a stopped state, the process is finished.

To specify the cause of the abnormality, an observer of the monitoring device 60 can use the image corresponding to a period before and after the time of the detected abnormality which is displayed on the output device 62, even in the case of the embodiment 4. The image displayed on the output device 62 is the same as the image output on the output device 31, according to the embodiment 1 shown in FIG. 5, or the image output on the output device 31, according to the embodiment 2 shown in FIG. 8.

Although the invention is described with reference to the embodiments described above, it is not limited thereto. For example, it is apparent to those skilled in the art that the invention can be modified, improved, combined, or the like in various ways without departing from the scope of the appended claims.

**Claims**

1. A shovel comprising:

an imaging device (20, 20F, 20R, 20L, 20B);
a temporary storage device (25) that is adapted to temporarily store image data acquired by the imaging device (20, 20F, 20R, 20L, 20B);
a plurality of sensors (27, 34) that are each adapted to detect a plurality of physical quantities relating to an operation state of the shovel;
an abnormality information storage device(32); and
a control device (30) that is adapted to determine whether or not an operation is abnormal based on detection values detected by the sensors (27, 34), and to transmit the image data, which corresponds to a period from a first time prior to a time at which the operation is determined to be abnormal to at least the time at which the operation is determined to be abnormal, from the temporary storage device (25) to the abnormality information storage device (32) when the operation is determined to be abnormal.

2. The shovel according to Claim 1,
   wherein the control device (30) is adapted to store the detection values detected by the sensors (27, 34) as well as the image data at the time at which the operation is determined to be abnormal in the abnormality information storage device (32).

3. The shovel according to Claim 1 or 2,
   wherein the control device (30) is adapted to additionally transmit the image data, which correspond to a period until a second time following the time at which the operation is determined to be abnormal, from the temporary storage device (25) to the abnormality information storage device (32) when the operation is determined to be abnormal.

4. The shovel according to any one of Claims 1 to 3,
   wherein the control device (30) is adapted
   to acquire the detection values detected by the plurality of sensors (27, 34), during a normal operation, and to decide a unit space, which is used in Mahalanobis-Taguchi method, based on the acquired detection values,
   to calculate Mahalanobis distance from the center of the unit space to detection values of an evaluation-target detected by the plurality of sensors (27, 34), and
   to perform the operation abnormality determination based on the calculated Mahalanobis distance.

5. The shovel according to any one of Claims 1 to 4,
   wherein the temporary storage device (25) has a ring buffer structure where the oldest image data are overwritten with new image data when no free storage area remains,
   wherein the control device (30) has an image capture mode storage portion (26) for storing an image capture mode which specifies the resolution of image data to be stored in the temporary storage device (25), and
   wherein the image data which is acquired by the imaging device (20, 20F, 20R, 20L, 20B) is stored in the temporary storage device (25) at the resolution specified in the image capture mode stored in the image capture mode storage portion (26).

6. The shovel according to any one of Claims 1 to 5, further comprising:

   an output device (31) for displaying an image,
   wherein the control device (30) is adapted
   to display a time indicator for an operator to specify a time on the output device (31), and
   to display the image data at the time specified by the time indicator, out of the image data stored in the abnormality information storage device (32), on the output device (31) as an image.

7. The shovel according to Claim 6,
   wherein the control device (30) is adapted to display information about the time range within which a time can be specified to be displayed on the time indicator and to display a temporal variation of alarm levels on the output device (31), corresponding to the time range displayed on the time indicator.

8. A method of monitoring a shovel (50) as set forth in any of the preceding claims, comprising:

   storing (SA1) image data acquired by the imaging device (20, 20F, 20R, 20L, 20B) mounted on the shovel (50) in the temporary storage device (25) temporarily;
   detecting (SB1) a plurality of physical quantities relating to an operation state of the shovel (50) by the plurality of sensors (27, 34) mounted on the shovel, respectively, and performing (SB2, SB3) an operation abnormality determination based on detection values detected by the sensors (27, 34);
   reading out (SB4) the image data from the temporary storage device (25) when an operation is determined to be abnormal in performing an operation abnormality determination;
   storing the image data read out from the temporary storage device (25) in the abnormality information storage device (32) ; and
   displaying the image data stored in the abnormality information storage device (32) as an image on an output device (31, 62).

9. The method of monitoring a shovel according to Claim 8, further comprising:

   displaying a time indicator for an operator to specify a time on the output device (31, 62); and
   specifying a time on the time indicator by an operator,
   wherein the image data at the time specified by an operator, out of the image data stored in the abnormality information storage device (32), is displayed as an image on the output device (31, 62) in displaying the image data as an image on the output device (31, 62).

10. The method of monitoring a shovel according to claim 8 or 9, wherein the step of displaying the image data comprises displaying the image data, which corresponds to a period from a first time prior to a time at which the shovel (50) is determined to be abnormal in performing (SB2, SB3) an operation abnormality determination to at least the time at which the shovel (50) is determined to be abnormal in performing (SB2, SB3) an operation abnormality determination on the output device (31, 61).

11. The method of monitoring a shovel according to any one of claims 8-10, further comprising:

   transmitting the image data to a monitoring device (60) of the shovel (50) after reading out the image data from the temporary storage device (25),
   wherein the step of storing the image data read out from the temporary storage device (25) comprises storing the image data received by the monitoring device (60) in the abnormality information storage device (32) of the monitoring device (60).

**Patentansprüche**

1. Bagger, der Folgendes aufweist:

   eine Bildaufnahmevorrichtung (20, 20F, 20R, 20L, 20B);
   eine temporäre Speichervorrichtung (25), die ausgebildet ist, temporär Bilddaten zu speichern, die durch die Bildaufnahmevorrichtung (20, 20F, 20R, 20L, 20B) aufgenommen wurden;
   eine Vielzahl von Sensoren (27, 34), die jeweils ausgebildet sind, eine Vielzahl von physischen Größen zu detektieren, die mit einem Betriebszustand des Baggers in Beziehung stehen;
   eine Abnormalitätsinformationsspeichervorrichtung (32); und
   eine Steuervorrichtung (30), die ausgebildet ist, zu bestimmen, ob ein Betrieb abnormal ist oder nicht, und zwar basierend auf Detektionswerten, die von den Sensoren (27, 34) detektiert wurden, und die Bilddaten zu übertragen, die einer Periode von einem ersten Zeitpunkt vor einem Zeitpunkt, an dem bestimmt wurde, dass der Betrieb abnormal ist, bis zumindest zu dem Zeitpunkt entsprechen, an dem bestimmt wird, dass der Betrieb abnormal ist, und zwar von der temporären Speichervorrichtung (25) zu der Abnormalitätsinformationsspeichervorrichtung (32), wenn bestimmt wird, dass der Betrieb abnormal ist.

2. Bagger nach Anspruch 1, wobei die Steuervorrichtung (30) ausgebildet ist, die Detektionswerte, die von den Sensoren (27, 34) detektiert werden, genauso wie die Bilddaten zu dem Zeitpunkt, zu welchem bestimmt wird, dass der Betrieb abnormal ist, in der Abnormalitätsinformationsspeichervorrichtung (32) zu speichern.

3. Bagger nach Anspruch 1 oder 2, wobei die Steuervorrichtung (30) ausgebildet ist, zusätzlich die Bilddaten zu übertragen, welche einer Periode bis zu einem zweiten Zeitpunkt folgend dem Zeitpunkt entsprechen, bei dem bestimmt wird, dass der Betrieb abnormal ist, und zwar von der temporären Speichervorrichtung (25) zu der Abnormalitätsinformationsspeichervorrichtung (32), wenn bestimmt wird, dass der Betrieb abnormal ist.

4. Bagger nach einem der Ansprüche 1 bis 3, wobei die Steuervorrichtung (30) ausgebildet ist zum
   Aufnehmen der Detektionswerte, die von der Vielzahl von Sensoren (27, 34) detektiert werden, während eines normalen Betriebs, und zum Entscheiden bzw. Festlegen eines Einheitsraums basierend auf den aufgenommenen Detektionswerten, der in einem Mahalanobis-Taguchi-Verfahren verwendet wird,
   zum Berechnen einer Mahalanobis-Distanz vom Zentrum des Einheitsraums zu Detektionswerten eines Bewertungsziels, welches durch die Vielzahl von Sensoren (27, 34) detektiert wurde, und
   zum Ausführen des Vorgangs einer Abnormalitätsbestimmung basierend auf der berechneten Mahalonobis-Distanz.

5. Bagger nach einem der Ansprüche 1 bis 4, wobei die temporäre Speichervorrichtung (25) eine Ringpufferstruktur hat, wobei die ältesten Bilddaten mit neuen Bilddaten überschrieben werden, wenn kein freier Speicherbereich verbleibt,

wobei die Steuervorrichtung (30) einen Bildaufnahmemodusspeicherteil (26) hat, um einen Bildaufnahmemodus zu speichern, der die Auflösung der Bilddaten spezifiziert, die in der temporären Speichervorrichtung (25) gespeichert werden sollen, und

wobei die Bilddaten, die von der Bildaufnahmevorrichtung (20, 20F, 20R, 20L, 20B) aufgenommen werden, in der temporären Speichervorrichtung (25) mit der Auflösung gespeichert werden, die in dem Bildaufnahmemodus spezifiziert ist, der in dem Bildaufnahmemodusspeicherteil (26) gespeichert ist.

6. Bagger nach einem der Ansprüche 1 bis 5, der weiter Folgendes aufweist:

eine Ausgabevorrichtung (31) zum Anzeigen eines Bildes, wobei die Steuervorrichtung (30) ausgebildet ist zum Anzeigen eines Zeitindikators für einen Bediener, um einen Zeitpunkt auf der Ausgabevorrichtung (31) zu spezifizieren, und

zum Anzeigen der Bilddaten auf der Ausgabevorrichtung (31) als Bild zu dem Zeitpunkt, der durch den Zeitindikator spezifiziert wird, und

zwar aus den Bilddaten, die in der Abnormalitätsinformationsspeichervorrichtung (32) gespeichert sind.

7. Bagger nach Anspruch 6, wobei die Steuervorrichtung (30) ausgebildet ist, Informationen über den Zeitbereich anzuzeigen, in dem ein Zeitpunkt als auf dem Zeitindikator angezeigt spezifiziert werden kann, und eine zeitliche Variation von Alarmniveaus auf der Ausgabevorrichtung anzuzeigen, und zwar entsprechend dem Zeitbereich, der auf dem Zeitindikator angezeigt wird.

8. Verfahren zur Überwachung eines Baggers (50) nach einem der vorhergehenden Ansprüche, welches Folgendes aufweist:

temporäres Speichern (SA1) von Bilddaten, welche von der Bildaufnahmevorrichtung (20, 20F, 20R, 20L, 20B), die an dem Bagger (50) befestigt ist, aufgenommen wurden, in der temporären Speichervorrichtung (25);

Detektieren (SB1) einer Vielzahl von physischen Größen, die sich auf den Betriebszustand des Baggers (50) beziehen, und zwar durch die Vielzahl von Sensoren (27, 34), die jeweils an dem Bagger befestigt sind, und Ausführen (SB2, SB3) einer Betriebsabnormalitätsbestimmung basierend auf Detektionswerten, die von den Sensoren (27, 34) detektiert wurden;

Auslesen (SB4) der Bilddaten aus der temporären Speichervorrichtung (25), wenn bei der Ausführung einer Betriebsabnormalitätsbestimmung bestimmt wird, dass der Betrieb abnormal ist;

Speichern der Bilddaten, die aus der temporären Speichervorrichtung (25) ausgelesen wurden, in der Abnormalitätsinformationsspeichervorrichtung (32); und

Anzeigen der Bilddaten, die in der Abnormalitätsinformationsspeichervorrichtung (32) gespeichert sind, und zwar als ein Bild auf einer Ausgabevorrichtung (31, 62).

9. Verfahren zur Überwachung eines Baggers nach Anspruch 8, welches weiter Folgendes aufweist:

Anzeigen eines Zeitindikators auf der Ausgabevorrichtung (31, 62) für einen Bediener zum Spezifizieren eines Zeitpunktes; und

Spezifizieren eines Zeitpunktes auf dem Zeitindikator durch einen Bediener, wobei die Bilddaten zu dem Zeitpunkt, der von einem Bediener spezifiziert wurde, von den Bilddaten angezeigt werde, die in der Abnormalitätsinformationsspeichervorrichtung (32) gespeichert sind, und zwar als ein Bild auf der Ausgabevorrichtung (31, 62), indem die Bilddaten als ein Bild auf der Ausgabevorrichtung (31, 62) angezeigt werden.

10. Verfahren zur Überwachung eines Baggers gemäß Anspruch 8 oder 9, wobei der Schritt des Anzeigens der Bilddaten aufweist, die Bilddaten anzuzeigen, die einer Periode von einem ersten Zeitpunkt vor einem Zeitpunkt, zu dem bestimmt wurde, dass der Bagger (50) abnormal ist bzw. eine Abnormalität zeigt, und zwar durch Ausführen (SB2, SB3) einer Betriebsabnormalitätsbestimmung, bis zumindest zu dem Zeitpunkt entsprechen, zu dem durch das Ausführen (SB2, SB3) einer Betriebsabnormalitätsbestimmung bestimmt wird, dass der Bagger (50) abnormal ist bzw. eine Abnormalität aufweist, und zwar auf der Ausgabevorrichtung (31, 61).

11. Verfahren zur Überwachung eines Baggers gemäß einem der Ansprüche 8 -10, welches weiter Folgendes aufweist:

Übertragen der Bilddaten zu einer Überwachungsvorrichtung (60) des Baggers (50) nach dem Auslesen der Bilddaten aus der temporären Speichervorrichtung (25),
wobei der Schritt des Speicherns der Bilddaten, die aus der temporären Speichervorrichtung (25) ausgelesen wurden, aufweist, die Bilddaten, welche von der Überwachungsvorrichtung (60) empfangen wurden, in der Abnormalitätsinformationsspeichervorrichtung (32) der Überwachungsvorrichtung (60) zu speichern.

**Revendications**

1. Pelle comprenant :

   un dispositif d'imagerie (20, 20F, 20R, 20L, 20B) ;
   un dispositif de stockage temporaire (25) qui est adapté à stocker temporairement des données d'image acquises par le dispositif d'imagerie (20, 20F, 20R, 20L, 20B) ;
   une pluralité de capteurs (27, 34) qui sont adaptés à détecter chacun une pluralité de grandeurs physiques relatives à un état de fonctionnement de la pelle ;
   un dispositif de stockage d'informations d'anomalie (32) ; et
   un dispositif de commande (30) qui est adapté à déterminer si un fonctionnement est anormal ou non sur la base de valeurs de détection détectées par les capteurs (27, 34), et à transmettre les données d'image, qui correspondent à une période séparant un premier instant précédant un instant auquel le fonctionnement est déterminé comme étant anormal d'au moins l'instant auquel le fonctionnement est déterminé comme étant anormal, depuis le dispositif de stockage temporaire (25) au dispositif de stockage d'informations d'anomalie (32) quand le fonctionnement est déterminé comme étant anormal.

2. Pelle selon la revendication 1,
   dans laquelle le dispositif de commande (30) est adapté à stocker les valeurs de détection détectées par les capteurs (27, 34) ainsi que les données d'image à l'instant auquel le fonctionnement est déterminé comme étant anormal dans le dispositif de stockage d'informations d'anomalie (32).

3. Pelle selon la revendication 1 ou 2,
   dans laquelle le dispositif de commande (30) est adapté à émettre en sus les données d'image, qui correspondent à une période jusqu'à un deuxième instant après l'instant auquel le fonctionnement est déterminé comme étant anormal, depuis le dispositif de stockage temporaire (25) au dispositif de stockage d'informations d'anomalie (32) quand le fonctionnement est déterminé comme étant anormal.

4. Pelle selon l'une quelconque des revendications 1 à 3,
   dans laquelle le dispositif de commande (30) est adapté à
   acquérir les valeurs de détection détectées par la pluralité de capteurs (27, 34), pendant un fonctionnement normal, et à décider d'un espace unitaire, qui est utilisé dans le procédé de Mahalanobis-Taguchi, sur la base des valeurs de détection acquises,
   calculer la distance de Mahalanobis du centre de l'espace unitaire aux valeurs de détection d'une cible d'évaluation détectée par la pluralité de capteurs (27, 34), et à
   effectuer la détermination d'anomalie de fonctionnement sur la base de la distance de Mahalanobis calculée.

5. Pelle selon l'une quelconque des revendications 1 à 4,
   dans laquelle le dispositif de stockage temporaire (25) a une structure de tampon circulaire dans laquelle les données d'image les plus anciennes sont écrasées par de nouvelles données d'image quand il ne reste aucune zone de stockage libre,
   dans laquelle le dispositif de commande (30) a une partie de stockage du mode de capture d'image (26) pour stocker un mode de capture d'image qui spécifie la résolution des données d'image à stocker dans le dispositif de stockage temporaire (25), et
   dans laquelle les données d'image qui sont acquises par le dispositif d'imagerie (20, 20F, 20R, 20L, 20B) sont stockées dans le dispositif de stockage temporaire (25) à la résolution spécifiée dans le mode de capture d'image stocké dans la partie de stockage du mode de capture d'image (26).

6. Pelle selon l'une quelconque des revendications 1 à 5, comprenant en outre :

   un dispositif de sortie (31) pour afficher une image,
   dans laquelle le dispositif de commande (30) est adapté à

afficher un indicateur de temps pour qu'un opérateur puisse spécifier un instant sur le dispositif de sortie (31), et à afficher les données d'image à l'instant spécifié par l'indicateur de temps, en dehors des données d'image stockées dans le dispositif de stockage d'informations d'anomalie (32), sur le dispositif de sortie (31) sous forme d'image.

7. Pelle selon la revendication 6,
dans laquelle le dispositif de commande (30) est adapté à afficher des informations concernant la plage de temps pendant laquelle un instant peut être spécifié pour être affiché sur l'indicateur de temps et à afficher une variation temporelle de niveaux d'alarme sur le dispositif de sortie (31), correspondant à la plage de temps affichée sur l'indicateur de temps.

8. Procédé de surveillance d'une pelle (50) selon l'une quelconque des revendications précédentes, comprenant les étapes suivantes :

le stockage (SA1) temporaire de données d'image acquises par le dispositif d'imagerie (20, 20F, 20R, 20L, 20B) monté sur la pelle (50) dans le dispositif de stockage temporaire (25) ;
la détection (SB1) d'une pluralité de grandeurs physiques relatives à un état de fonctionnement de la pelle (50) par la pluralité de capteurs (27, 34) montés sur la pelle, respectivement, et la mise en oeuvre (SB2, SB3) d'une détermination d'une anomalie de fonctionnement sur la base de valeurs de détection détectées par les capteurs (27, 34) ;
la lecture (SB4) des données d'image provenant du dispositif de stockage temporaire (25) quand un fonctionnement est déterminé comme étant anormal pendant la mise en oeuvre de la détermination d'une anomalie de fonctionnement ;
le stockage des données d'image provenant du dispositif de stockage temporaire (25) dans le dispositif de stockage d'informations d'anomalie (32) ; et
l'affichage des données d'image stockées dans le dispositif de stockage d'informations d'anomalie (32) sous forme d'une image sur un dispositif de sortie (31, 62).

9. Procédé de surveillance de la pelle selon la revendication 8, comprenant en outre les étapes suivantes :

l'affichage d'un indicateur de temps pour qu'un opérateur puisse spécifier un instant sur le dispositif de sortie (31, 62) ; et
la spécification d'un instant sur l'indicateur de temps par un opérateur,
dans lequel les données d'image à l'instant spécifié par un opérateur, en dehors des données d'image stockées dans le dispositif de stockage d'informations d'anomalie (32), sont affichées sous forme d'une image sur le dispositif de sortie (31, 62) pendant l'affichage des données d'image sous forme d'une image sur le dispositif de sortie (31, 62).

10. Procédé de surveillance d'une pelle selon la revendication 8 ou 9, dans lequel l'étape d'affichage des données d'image comprend l'affichage des données d'image, qui correspondent à une période séparant un premier instant précédant un instant auquel la pelle (50) est déterminée comme ayant un fonctionnement anormal pendant la mise en oeuvre (SB2, SB3) d'une détermination d'anomalie de fonctionnement d'au moins l'instant auquel la pelle (50) est déterminée comme ayant un fonctionnement anormal pendant la mise en oeuvre (SB2, SB3) d'une détermination d'anomalie de fonctionnement sur le dispositif de sortie (31, 61).

11. Procédé de surveillance d'une pelle selon l'une quelconque des revendications 8 à 10, comprenant en outre les étapes suivantes :

l'émission des données d'image à destination du dispositif de surveillance (60) de la pelle (50) après la réception des données d'image provenant du dispositif de stockage temporaire (25),
dans lequel l'étape de stockage des données d'image reçues du dispositif de stockage temporaire (25) comprend le stockage des données d'image reçues par le dispositif de surveillance (60) dans le dispositif de stockage d'informations d'anomalie (32) du dispositif de surveillance (60).

## FIG. 1A

## FIG. 1B

# FIG. 2

# FIG. 3

START

IMAGE DATA FROM IMAGING
DEVICE IS STORED IN TEMPORARY
STORAGE DEVICE — SA1

WAITING TIME — SA2

IS SHOVEL IN STOPPED STATE? — SA3

N

Y

FINISH

# FIG. 4

START

DETECTION VALUE IS ACQUIRED FROM SENSOR — SB1

IT IS DETERMINED WHETHER OR NOT OPERATION IS ABNORMAL — SB2

IS OPERATION ABNORMAL? — SB3

Y

N

IMAGE DATA IS TRANSMITTED FROM TEMPORARY STORAGE DEVICE TO ABNORMALITY INFORMATION STORAGE DEVICE, AND DETECTION VALUE OF SENSOR IS STORED IN ABNORMALITY INFORMATION STORAGE DEVICE — SB4

IS SHOVEL IN STOPPED STATE? — SB5

N

SB6 — WAITING TIME

Y

FINISH

# FIG. 5

31

35

36B
36A
36

10:32    10:33    10:34    10:35    10:36

37

JUMP TO TIME
OF ABNORMALITY
OCCURENCE

38

2012/04/26 10:35:20 ABNORMALITY IS DETECTED

**FIG. 6**

```
                    ┌─────────┐
                    │  START  │
                    └────┬────┘
                         │
                         ▼
        ┌──────────────────────────────────┐
        │  DETECTION VALUE IS ACQUIRED      │──── SC1
        │         FROM SENSOR               │
        └────────────────┬─────────────────┘
                         │
                         ▼
                  ╱──────────────╲        Y
                 ╱  IS UNIT SPACE ╲───────────────┐
                 ╲   DEFINED?     ╱──── SC2        │
                  ╲──────┬───────╱                 │
                         │ N                        │
                         ▼                          │
        ┌──────────────────────────────────┐       │
        │  DETECTION VALUE IS               │──── SC3│
        │  ACCUMULATED AS SAMPLE            │       │
        └────────────────┬─────────────────┘       │
                         │                          │
                         ▼                          │
          N       ╱──────────────╲                  │
        ◄─────────╱  IS THE       ╲──── SC4         │
                 ╱   NUMBER        ╲                 │
                 ╲  OF SAMPLES     ╱                 │
                  ╲  ENOUGH?      ╱                  │
                   ╲──────┬──────╱                   │
                         │ Y                         │
                         ▼                          │
        ┌──────────────────────────────────┐       │
        │     UNIT SPACE IS DEFINED         │──── SC5│
        └────────────────┬─────────────────┘       │
                         │                          │
                         ▼                          │
        ┌──────────────────────────────────┐       │
        │  UNIT SPACE DEFINING FLAG IS SET  │──── SC6│
        └────────────────┬─────────────────┘       │
                         │◄──────────────────────────┘
                         ▼
        ┌──────────────────────────────────┐
        │   MAHALANOBIS DISTANCE (MD)       │──── SC7
        │       IS CALCULATED               │
        └────────────────┬─────────────────┘
                         ▼
                  ╱──────────────╲    Y
                 ╱ MD>THRESHOLD?  ╲────────┐  SC9
                 ╲──────┬────────╱── SC8   │
                         │ N               ▼
                         │   ┌──────────────────────────────┐
                         │   │ IMAGE DATA IS TRANSMITTED FROM│
                         │   │ TEMPORARY STORAGE DEVICE TO   │
                         │   │ ABNORMALITY INFORMATION STORAGE│
                         │   │ DEVICE, AND DETECTION VALUE OF│
                         │   │ SENSOR IS STORED IN ABNORMALITY│
                         │   │ INFORMATION STORAGE DEVICE    │
                         │   └──────────────┬────────────────┘
                         ▼◄─────────────────┘
              N   ╱──────────────╲
        ◄─────────╱  IS           ╲──── SC10
                 ╱  SHOVEL         ╲
                 ╲ IN STOPPED      ╱
                  ╲  STATE?       ╱
                   ╲──────┬──────╱
   SC11                  │ Y
   ┌──────────────┐      ▼
   │ WAITING TIME │  ┌─────────┐
   └──────────────┘  │ FINISH  │
                     └─────────┘
```

# FIG. 7

| SAMPLE NUMBER | PHYSICAL QUANTITY 1 | PHYSICAL QUANTITY 2 | . . . | PHYSICAL QUANTITY k | . . . | PHYSICAL QUANTITY K |
|---|---|---|---|---|---|---|
| 1 | x(1,1) | x(1,2) | . . . | x(1,k) | . . . | x(1,K) |
| 2 | x(2,1) | x(2,2) | . . . | x(2,k) | . . . | x(2,K) |
| 3 | x(3,1) | x(3,2) | . . . | x(3,k) | . . . | x(3,K) |
| . | . | . | | . | | . |
| n | x(n,1) | x(n,2) | . . . | x(n,k) | . . . | x(n,K) |
| . | . | . | | . | | . |
| N | x(N,1) | x(N,2) | . . . | x(N,k) | . . . | x(N,K) |
| MEAN VALUE | m(1) | m(2) | . . . | m(k) | . . . | m(K) |
| STANDARD DEVIATION | σ(1) | σ(2) | . . . | σ(k) | . . . | σ(K) |

# FIG. 8

10:32   10:33   10:34   10:35   10:36

ALARM LEVEL 3

ALARM LEVEL 2

ALARM LEVEL 1

JUMP TO TIME OF
ABNORMALITY
OCCURRENCE

2012/04/26 10:35:20 EXCEED ALARM LEVEL 3

# FIG. 9

# FIG. 10

START

DETECTION VALUE IS ACQUIRED FROM SENSOR —— SB1

IT IS DETERMINED WHETHER OR NOT OPERATION IS ABNORMAL —— SB2

—— SB3

IS OPERATION ABNORMAL? — Y

N

IMAGE DATA OF TEMPORARY STORAGE DEVICE AND DETECTION VALUE OF SENSOR ARE TRANSMITTED TO MONITORING DEVICE VIA TRANSCEIVER —— SD4

—— SB5

N — IS SHOVEL IN STOPPED STATE?

SB6 ——

WAITING TIME

Y

FINISH

# FIG. 11

# FIG. 12

START

IS ABNORMALITY DETERMINATION REQUEST RECEIVED? — SE1

N

Y

WHETHER OR NOT OPERATION IS ABNORMAL IS DETERMINED BASED ON DETECTION VALUE INPUT FROM SENSOR — SE2

IS OPERATION ABNORMAL? — SE3

Y

N

IT IS COMMANDED TO TRANSMIT IMAGE DATA VIA TRANSCEIVER — SE4

IMAGE DATA RECEIVED VIA TRANSCEIVER AND DETECTION VALUE OF SENSOR ARE STORED IN ABNORMALITY INFORMATION STORAGE DEVICE — SE5

IS MONITORING DEVICE IN STOPPED STATE? — SE6

N

Y

FINISH

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002332664 A

- JP 2011070397 A